# EUROPÄISCHE PATENTANMELDUNG

(11) **EP 0 795 846 A2**
(43) Veröffentlichungstag der Anmeldung: **17.09.1997**
(21) Anmeldenummer: 97102397.3
(22) Anmeldetag: 14.02.1997
(51) Int. Cl.: G09F 13/18

(54) **Aus mehreren Teilen zusammengesetztes Lichtleitelement**

(30) Priorität: 01.03.1996 DE 19607822
(71) Anmelder: Röhm GmbH, 64293 Darmstadt (DE)
(72) Erfinder: Fischer, Udo, Dr.-Ing., 64297 Darmstadt (DE)

(57) **Zusammenfassung**

Die Erfindung betrifft ein Lichtleitelement, bestehend aus einem Matrixkunstoff und darin homogen verteilten Streupartikeln, dadurch gekennzeichnet, daß es aus mindestens zwei Teilen (2) zusammengesetzt ist, wobei die aufeinanderstoßenden Kanten der Teile bündig sind und jeweils mit einer reflektierenden Folie (3) überzogen sind.

## Beschreibung

Die Erfindung betrifft das Gebiet der kantenbeleuchteten Lichtleitelemente, inbesondere ein gleichmäßig ausgeleuchtetes Lichtleitelement, das aus mehreren Teilen besteht.

### Stand der Technik

Lichtleitelemente sind z. B. aus EP-A 533 301, aus EP-PS 371 073 oder aus DE-U 93 00 991 bekannt. EP-A 656 548 beschreibt kantenbeleuchtete Lichtleitelemente in Form einer Kunststoffplatte, bestehend aus einem Matrixkunststoff A und darin homogen verteilten Streupartikeln aus einem Polymerisat B. Mittels der Streupartikel läßt sich eine besonders gleichmäßige Ausleuchtung erzielen. Derartige Kunststoffplatten, die vorwiegend aus Polymethylmethacrylat als Hauptkomponente bestehen, werden im Gießverfahren hergestellt. Die Maximalgrößen liegen bei ca. 2 mal 3 m. Werbeflächen, für die Lichtleitelemente verwendet werden, sind jedoch häufig größer. Eine besonders gebräuchliche Abmessung für große Werbeflächen ist z. B. 3,6 mal 2,6 m in Länge bzw. Breite. Diese Abmessungsgröße wird auch als 18/1 oder 18 mal DIN A1 bezeichnet. Will man ein Lichtleitelement in dieser Größe herstellen, so bedeutet dies zwangsläufig, daß es mehreren Teilen zusammengesetzt werden muß. Das Problem dabei ist, daß in der Regel keine gleichmäßige Ausleuchtung der gesamten Fläche mehr zu erzielen ist. Insbesondere an den Stoßstellen kann es zu einer unerwünschten Überblendung kommen.

### Aufgabe und Lösung

Die Aufgabe der vorliegenden Erfindung war es, eine gleichmäßige Ausleuchtung insbesondere von großen Flächen zu ermöglichen, bei denen die Lichtleitelemente aus mehreren Teilen zusammengesetzt werden. Der Übergang der Teile soll bei Beleuchtung nicht sichtbar sein. Die Aufgabe wird gelöst durch ein Lichtleitelement, bestehend aus einem Matrixkunstoff und darin homogen verteilten Streupartikeln, dadurch gekennzeichnet, daß es aus mindestens zwei Teilen zusammengesetzt ist, wobei die aufeinanderstoßenden Kanten der Teile bündig sind und jeweils mit dünner, reflektierenden Folie überzogen sind. Wesentlich ist dabei, daß die Kanten bündig aneinander stehen, so daß der Stoß als solcher auch bei Beleuchtung nicht augenscheinlich wird. Die bündig aneinanderstoßenden Kanten sind jeweils mit refektierender Folie überzogen, so daß das Licht in den Lichtleitelementen zurückreflektiert wird und sich kein Phasenübergang zum anstoßenden Teil ergibt. Die Erfindung ermöglicht es daher, große leuchtende Flächen mit Lichtleitelementen aus mehreren Teilen zu realisieren, ohne daß die Stoßstellen augenscheinlich sichtbar werden oder die Ausleuchtung der gesamten Fläche ungleichmäßig wird.

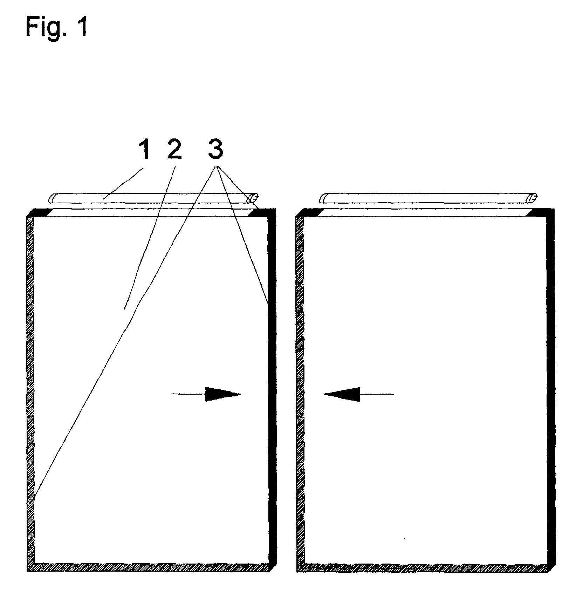

Die Erfindung wird durch die nachstehende Figur 1 erläutert, ist aber nicht auf die dargestellte Ausführungsform beschränkt. Die Figur 1 zeigt ein Lichtleitelement (2) aus zwei Acrylglasscheiben, die jeweils von oben mittels einer Lampe (1) beleuchtet werden können. Die Kanten der Acrylglasscheiben sind teilweise mit einer verspiegelten Folie (3) überzogen. Die Pfeile zeigen an, wie die Acrylglasschieben aneinandergesetzt werden, damit eine gemeinsame leuchtende Fläche erhalten wird.

### Ausführung der Erfindung

Für die Lichtleitelemente wird vorzugsweise Acrylglas aus einem Matrixkunststoff und darin homogen verteilten Streupartikeln verwendet, wie es z. B. in der EP-A 0 656 548 beschrieben ist. Derartige Kunststoffplatten können im Handel z. B. unter der Bezeichnung PLEXIGLAS® GS 1001 bezogen werden. Für große Lichtleitelemente in der Standardgröße 2,6 mal 3,6 m (18 mal DIN A1) sind Acrylglasplatten von ca. 20 mm Dicke zweckmäßig. In der Regel sind die Ränder der im Handel erhältlichen Platten jedoch nicht völlig eben und müssen daher nachgearbeitet werden. Die aneinanderzusetzenden Teile (2), zwei oder ggf. mehr als zwei, werden zunächst am Rand senkrecht zur Oberfläche geschnitten, so daß möglichst absolut ebene Stoßstellen entstehen. Dazu kommt z. B. das Diamantfräsverfahren oder ein Schneiden mittels eines speziellen Sägeblatts, wie es in der DE-A 44 23 434 beschrieben ist, zum Einsatz. Daraufhin werden die glatten Kanten mit einer verspiegelten Folie (3) überzogen. Zweckmäßig ist hier z. B. der Einsatz eines spiegelnd beschichteten Klebebands, wie z. B. Scotch Polyester Tape 850 Silber. Die so vorbereiteten Teile können nun mittels Befestigungselementen so montiert werden, daß ein Verrutschen gegeneinander vermieden wird. Dies kann durch einen Rahmen geschehen oder durch das Einsetzen von Paßstiften. Wichtig ist, daß die Stoßstellen keinerlei Zwischenräume ausweisen. Die Beleuchtung kann von einer oder mehreren Kanten der Teile erfolgen, dabei muß pro Teil wenigstens eine Lampe (1), z. B. mittig einer Kante angebracht werden. Es ist zweckmäßig nicht beleuchtete Kanten mit verspiegelter Folie abzukleben. Vor dem Lichtleitelement wird ein lichtstreuender Informationsträger angebracht. Dabei kann es sich z. B. um ein Plakat handeln, das zum Schutz gegen äußere Einflüsse mit einer transparenten Scheibe abgedeckt werden kann.

## Patentansprüche

1. Lichtleitelement, bestehend aus einem Matrixkunstoff und darin homogen verteilten Streupartikeln, dadurch gekennzeichnet, daß es aus mindestens zwei Teilen (2) zusammengesetzt ist, wobei die aufeinanderstoßenden Kanten der Teile bündig sind und jeweils mit einer reflektierenden Folie (3) überzogen sind.

2. Lichtleitelement nach Anspruch 1, dadurch gekennzeichnet, daß es eine Abmessung von über 3 m in der Länge und/oder in der Breite aufweist.

3. Lichtleitlement nach Anspruch 2, dadurch gekennzeichnet, daß es Abmessungen von 3,6 mal 2,6 m in Länge bzw. Breite aufweist.

4. Lichtleitlelement nach Anspruch 1, dadurch gekennzeichnet, daß die Teile durch Befestigungselemente miteinander fixiert sind.

5. Lichtleitelement nach nach einem oder mehreren der Ansprüche 1 bis 4, dadurch gekennzeichnet, daß davor ein lichtstreuender Informationsträger angebracht ist.
